# EUROPEAN PATENT SPECIFICATION

(11) **EP 0 384 564 B1**
(45) Date of publication and mention of the grant of the patent: **31.08.1994**
(21) Application number: 90300495.0
(22) Date of filing: 17.01.1990
(51) Int. Cl.: G01J 1/42

(54) **Photosensing device based on tunnel effect**
Tunnel-Effekt-Photosensor
Photodétecteur basé sur l'effet tunnel

(30) Priority: 20.01.1989 JP 9921/89; 27.11.1989 JP 304879/89
(43) Date of publication of application: 29.08.1990
(73) Proprietor: CANON KABUSHIKI KAISHA, Tokyo (JP)
(72) Inventor: Eguchi, Ken, Yokohama-shi, Kanagawa-ken (JP); Miyazaki, Toshihiko, Hiratsuka-shi, Kanagawa-ken (JP); Sakai, Kunihiro, Isehara-shi, Kanagawa-ken (JP)
(74) Representative: Beresford, Keith Denis Lewis

(56) References cited:
- EP-A- 0 027 517
- EP-A- 0 296 262
- DE-A- 3 242 712
- JAPANESE JOURNAL OF APPLIED PHYSICS/PART 2: LETTERS, vol. 27, no. 5, May 1988, pages L886-L888, Tokyo, JP; Y. Yasuoka et al: "n-InSb Point Contact Warm Carrier Infrared Laser Detectors"
- JOURNAL OF VACUUM SCIENCE & TECHNOLOGY: PART A, vol. 6, no. 2, March/April 1988, pages 466-469, New York, US; L. Arnold et al: "Laser-frequency mixing using the scanning tunneling microscope"
- PATENT ABSTRACTS OF JAPAN, vol. 11, no. 260 (P-608)(2707), 22 August 1987; & JP-A-62 63823

## Description

The present invention relates to a method and an apparatus for measuring the power level of optical radiation. Such apparatus has possible application to, for example, photon counting, light intensity distribution measurement, and colour image detection.

A unique feature of the apparatus disclosed below is the inclusion of a point-contact optical detector. Such detectors, for example metal-insulator-metal (MIM) junction detectors, are known but have been used in other applications. These will now be discussed by way of background information.

In a metal-insulator-metal (MIM) junction, electrons penetrate through the energy barrier in an extremely short time of an order of 10⁻¹⁶ second. Thus, by use of this type of junction, ultrahigh speed detection of electro-magnetic waves can be achieved over a wide range of frequency from micro-wave to visible light. Conventional metal-metal point-contact diodes used for wave detection and frequency mixing at far infrared and infrared wavelength regions are, however, vulnerable to mechanical or electrical shock, resulting in shorter life because of the point-contact type thereof. (See Koichi IJICHI, and Sogo OKAMURA: Denshi Tsushin Gakkai (Electronic Communication Society), Microwave Research Data: MW-73-27 (1973-06)).

For this reason, a mechanically strong MIM junction is demanded for a practical wave detector. In view of the RC time constant, the resistance to tunnel current is so very small, that the detected signal cannot be taken out effectively, because the impedance is too low, even in an MIM junction having a minimum area producible by vapour deposition.

On the other hand, a method is considered which utilises an ultra-thin metal film having an island-like structure prepared by vapour deposition for the purpose of realising a junction having a minute area. (See T.E. Hartman: J. Appl. Phys., 34, 943 (1963)).

This ultra-thin film has a structure in which numberless MIM junctions are connected mutually in parallel and in series over all the face. This ultra-thin film is utilised as an ultrahigh speed detector, in which the signals detected by the individual MIM junctions are integrated on the whole surface, and taken out when an infrared light is irradiated on it. However, it is not easy to produce such an ultra-thin metal film having a stable and reproducible island-like structure so that it is difficult to produce elements having constant wave-detection characteristics. Morever, ultra-thin film is vulnerable to electric shock and has a short operational life.

Scanning tunnelling microscopes can also be mentioned here since these, like point-contact optical detectors, include a probe electrode and an adjacent electrode. These electrodes are spaced apart by a small gap and a tunnel current flows when a voltage is applied between the probe electrode and the adjacent electrode. Such microscopes differ from point-contact optical detectors in that a scanning mechanism is provided so that the probe can be displaced laterally - i.e. scanned - across the surface of the adjacent electrode. In conventional scanning tunnel microscope use the adjacent electrode surface is scanned by moving the probe electrode relative to the electrode surface while the gap between the probe electrode and the electrode surface is adjusted using a servo mechanism to keep the tunnel current constant. A signal produced at the output of the servo mechanism provides a measure of the scanned surface profile.

European Patent Application EP-A-0296262 describes a method for investigating surfaces at nanometer and picosecond resolution. A laser irradiated scanning tunnelling microscope apparatus is used to perform this method. This apparatus, in common with the apparatus disclosed below, comprises a single probe electrode, a light absorbent electrode, a means for adjusting the distance between the probe electrode and the light absorbent electrode, and a constant voltage source applied across the probe electrode and the light absorbent electrode. Pulsed laser light is directed to an area of the light absorbent electrode which is laterally displaced from the tip of the probe electrode. The transient electroconductive behaviour of the tested surface is measured by the tunnelling current response of the device.

The present inventors have found that a point-contact-optical detector can be used as a reliable means for measuring the power level of optical radiation.

In accordance with a first aspect of the present invention there is provided a method of measuring the power level of optical radiation, which method comprises:
providing a point-contact optical detector having a probe electrode, a light-absorbent electrode adjacent thereto, and a servo-adjustment means for adjusting the distance therebetween;
applying a constant voltage across said detector to generate a probe current;
irradiating said detector with intermittent optical radiation; and
amplifying and processing said probe current, which is comprised of both light current and dark current components generated during light and dark periods of said intermittent optical radiation, respectively, thereby to produce a difference signal corresponding to the difference between light current and dark current, and to extract dark current;
meanwhile, adjusting the distance between said probe electrode and said light-absorbent electrode only during each of said dark periods, said servo-adjustment means responding to said dark current, extracted as aforesaid, by adjusting said distance to maintain said dark current constant.

The difference signal produced during the above-mentioned amplifying and processing provides a measure of the power level of the incident radiation. Errors are not allowed to accumulate since adjustments are made in each dark period.

In accordance with a second aspect of the present invention there is provided an apparatus for measuring the power level of optical radiation, which apparatus comprises:
a point-contact optical detector having a probe electrode, a light absorbent electrode adjacent thereto, and servo-adjustment means for adjusting the distance therebetween;
voltage means for applying a constant voltage between said probe electrode and said light absorbent electrode to generate a probe current; and amplification and processing means, responsive to said probe current comprised of both light current and dark current components generated during respective light and dark periods of intermittent optical radiation directed onto said detector, which amplification and processing means is operable to produce a difference signal corresponding to the difference between light current and dark current, and to extract dark current; wherein said servo-adjustment means is responsive to the dark current extracted by said amplification and processing means, but not to any light current, so that the distance between said probe electrode and said light absorbent electrode is adjusted only during each dark period, said servo-adjustment-means being operable thus to maintain the dark current-constant.

In the accompanying drawings:
Fig. 1 illustrates a block constitution of a photosensing device embodiment of the present invention;
Fig. 2 illustrates a block constitution of a photosensing apparatus having a photosensing device;
Fig. 3 shows a sensitivity curve of the photosensing device of Example 1;
Fig. 4 and Fig. 5 show respectively the spectral characteristics of the photosensing device in Example 3 and Example 4; and
Fig. 6 illustrates a block constitution of another photosensing apparatus embodiment of the present invention.

For a better understanding of the invention, preferred embodiments thereof will now be described and reference will be made to the drawings. The following description is by way of example only.

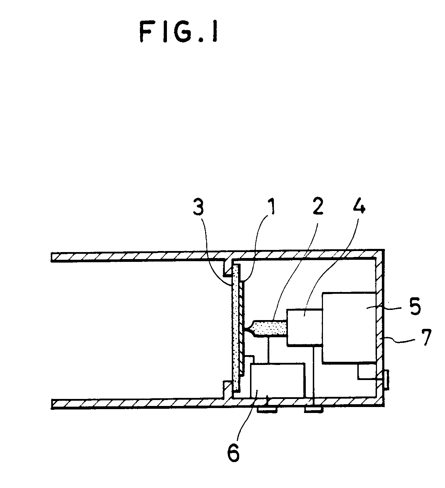

Fig. 1 illustrates a block constitution of a photosensing device embodiment of the present invention. A probe electrode 2 and a light-absorbing electrode 1 provided on a transparent substrate 3 in opposition to the probe electrode are placed in a light and electromagnetic shield box 7.

A current-preamplifier 6 amplifies the probe current flowing on application of a constant voltage between the probe electrode 2 and the light-absorbing electrode 1. A fine control mechanism 4, employing a piezo element, controls the distance between the light-absorbing electrode 1 and the probe electrode 2 so as to keep the probe current constant. A coarse control mechanism 5 is provided to bring the probe electrode beforehand to a position within a controllable range of the fine control mechanism.

As the probe electrode 2, a wire (1 mm in diameter) made of a noble metal such as Pt can be used, a tip of which is mechanically ground into a cone shape of 90° and the surface atoms of which are evaporated off by application of an electric field in ultrahigh vacuum. However, any electroconductive material having an electro conductivity of not less than 10⁻⁶ S/cm, such as a probe of electrically polished tungsten, may be used as the probe electrode. The probe electrode is not limited by shape, by material, or by treatment.

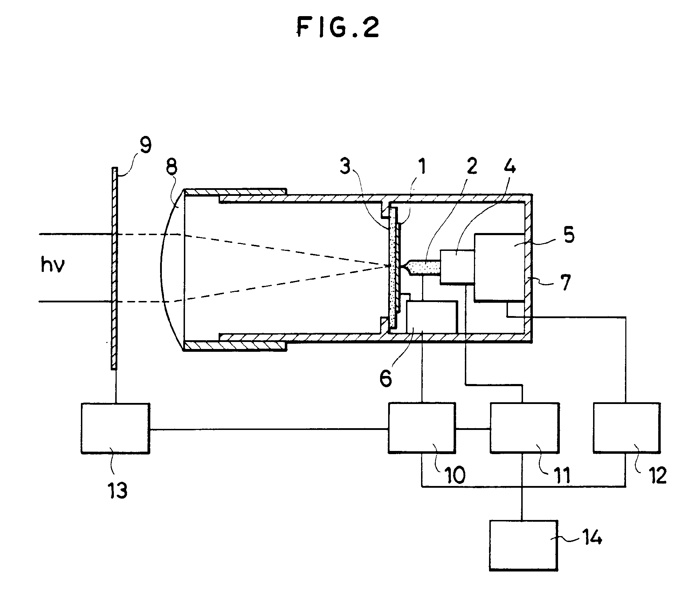

The light-absorbing electrode 1, on the other hand, may utilise directly the light-absorbing characteristics of a material having a high electroconductivity. For that purpose, the employed electrode material is exemplified by metals such as Au, Pt, Rh, Ag, Pd, Al, In, Sn, W, etc., or alloys thereof; graphite; electroconductive oxides such as silicides, ITO, etc; electroconductive organic materials; and many other materials. These materials may be used in the present invention. The electrode employing such a material may be prepared by any known thin-film-forming method. The substrate 3 supporting the electrode may be made of any material of glass, ceramics, and plastics, etc. In the case where light is introduced from a side of the electrode 1 opposite to the probe electrode 2 as shown in Fig. 2, the substrate material must be either semi-transparent or transparent. The substrate may be of any shape, but preferably it is planar.

For providing a photosensing device sensitive to a specific wavelength of light, organic dyes are preferably used as a light-absorbing medium. Although organic dyes per se are generally insulative and are not applicable as electrode materials, they can be used in the present invention if deposited thinly on an electroconductive medium. The electroconductive medium may be made from any of the materials having a high electroconductivity as mentioned above. However, a light transmission type of optical system as shown in Fig. 2 requires a transparent or semi-transparent electrode material. An electrode employing such a material can be formed satisfactorily according to known film-forming techniques. Preferably, the electrode material is a composite of a noble metal and an electroconductive oxide such as ITO, which material does not change to insulating oxide during deposition of organic dye film on its surface.

Such dye may be deposited satisfactorily by a known thin-film-forming technique. For this purpose, the LB method is particularly suitable since this allows control of film thickness to an accuracy on the order of a molecular length. The light-absorption layer chosen typically will have a thickness in the range 1 nm to 50 nm, and preferably from 1 nm to 20 nm.

Fig. 2 illustrates a block constitution of a photosensing apparatus provided with the photosensing device shown in Fig. 1.

A servo circuit 11 controls the fine control mechanism 4. A coarse driving circuit 12 drives the coarse control mechanism 5.

In principle, the level of incident light can be detected by monitoring either the probe current or, alternatively, the output voltage of the servo circuit during light irradiation. In Fig. 2, the incident light is irradiated intermittently through a shutter means, in particular a chopper 9, and the probe current is amplified in synchronisation with the chopper by means of a synchronous amplification circuit 10. This synchronous amplification circuit 10 amplifies any difference between light current and dark current, and simultaneously detects the synchronous signal of light irradiation and actuates a HOLD circuit, thereby delivering only dark current signal to the servo circuit as the servo signal. Thus the fine control mechanism is controlled by keeping constant the dark current so as to keep constant the distance between the probe electrode 2 and the light absorbing electrode 1. In the actuation process, the probe current output, the servo circuit output, and the coarse control output are monitored by a display device 14. A chopper driving circuit 13 is provided for driving the chopper 9.

A lens 8 serves to condense the incident light onto the light absorbing electrode. The lens is provided for raising the sensitivity, but is not essential. The arrangement of the optical system is not limited to that disclosed as various other arrangements are applicable. For example, the light may be irradiated from the side of the probe electrode. The chopper 9 also is not an essential component of the photosensing apparatus.

The measured values obtained are both stable and reproducible since the distance between the probe electrode and the light-absorbing medium is maintained constant while the change of the tunnel current caused by light irradiation is measured. The light absorption medium can be chosen from a wide variety of materials and thus the spectral characteristics can be optimised as required. Since changes of state of the light absorbing medium can be detected at a similar sensitivity to that of a scanning tunnel microscope, both a photosensing device and a photosensing apparatus suitable for photon counting with extremely high sensitivity can be provided.

Examples of the present invention specifically are described as follows.

### Example 1

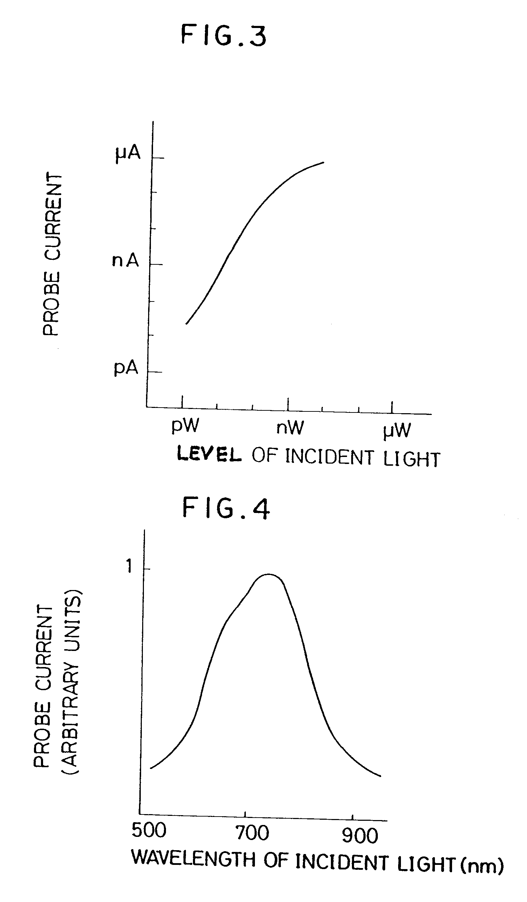

On a fused quartz substrate plate having been washed carefully and sufficiently, an Au electrode having a film thickness of 30 nm was formed by vacuum deposition employing resistance-heating with a tungsten filament to prepare a photosensing device as shown in Fig. 1. By employing this element in a manner as shown in Fig. 2, a voltage of 100 mV was applied between the probe electrode and the light-absorbing electrode with the probe electrode being positive, and the fine control mechanism and the coarse control mechanism controlled to maintain the dark current at 10 pA. The relation between the probe current output and the incident light energy was observed by projecting a monochromatic light of 400 nm at 237 Hz to obtain the result shown in Fig. 3. A photosensing device with a high sensitivity showing a satisfactory S/N ratio at an incident light level of several ten pW could be obtained. The incident light level was calibrated with a Radio Meter, Model-360, made by United Detector Technology Co.

### Example 2

An LB film (8 layered) of squarilium-bis-6-octylazulene (hereinafter referred to as "SOAZ") was formed as a light-absorbing medium on an Au electrode prepared in the same manner as in Example 1. Measurement by projecting a monochromatic light of 750 nm at 237 Hz gave the result that a probe current signal with a sufficient S/N ratio could be obtained even at a light level of 10 pW.

### Example 3

A light-absorbing electrode was prepared by laminating a SOAZ LB film in 8 layers on an ITO electrode. The spectral characteristics of the probe current were measured therewith. The power level of the incident light was approximately constant at about 100 pW. Fig. 4 shows the results. The spectral characteristics coincide approximately with the absorption spectrum.

### Example 4

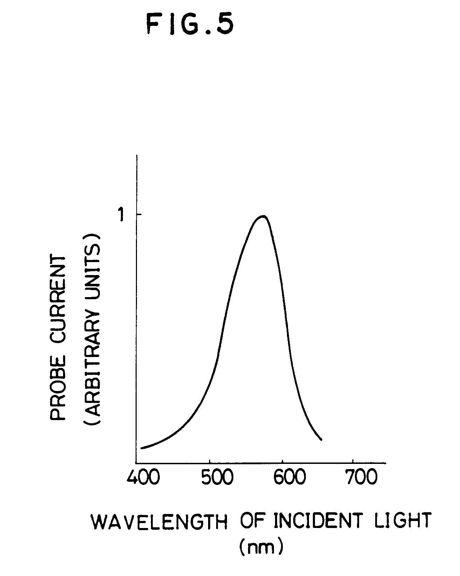

A photosensing device was prepared in the same manner as in Example 3 except that one layer of bacteriorhodopsin was laminated according to an LB method in place of SOAZ. The spectral characteristics were similar to the visual response of the human eye and the device was of high sensitivity. Fig. 5 shows these spectral characteristics.

### Example 5

A light-absorbing electrode was prepared by depositing amorphous silicon to a thickness of 10 nm by glow discharge. The sensitivity thereof to light of 600 nm wavelength was measured. It was found that a signal of sufficient S/N ratio was generated even at a light level as low as 10 pW.

Only a device having a single probe has been described in each of Examples 1 - 5. The device of the present invention, however, is not limited to single-probe construction. A plurality of probe electrodes may be provided to measure light intensity distribution over a plane surface. Alternatively they may be used in combination with colour filters for colour-image sensing.

Example 6 below concerns such a multi-probe photosensing device and apparatus.

### Example 6

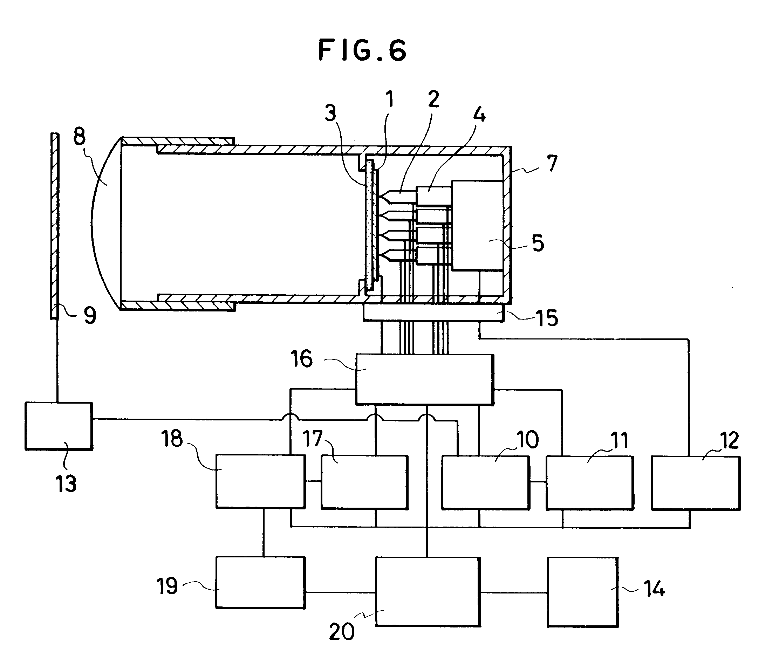

Fig. 6 illustrates a block constitution of a photosensing apparatus employing a device including multiple probes. The photosensing device comprises four probe electrodes 2 and a light-absorbing electrode 1 arranged opposite to the probe electrodes. Probe currents, which are generated when a constant voltage is applied between the probe electrodes 2 and the light-absorption electrode 1, are amplified. Each probe electrode is attached to a fine control mechanism 4 having a piezo element for controlling the distance between it and the light-absorbing electrode 1. Each fine control mechanism 4 is controlled by a servo circuit so that the probe current can be kept constant.

In use, one of the electrodes is chosen as a standard. In the same manner as described in Fig. 2, the incident light intensity, at the position of this standard probe electrode, is detected. The distance between the light-absorbing electrode 1 and the standard probe electrode 2 is adjusted by control of the fine control mechanism by the servo circuit 11 so as to keep the probe dark current constant. Then, the differences of the probe current flowing at the standard probe electrode from the probe currents flowing at other probe electrodes are amplified by the probe current amplifying circuit 17, and each fine control mechanism 4 is controlled by the servo circuit 18 so that the differences between the probe currents may be adjusted to zero. The relative difference of incident-light intensities at each probe position can be read from the signal output of the servo circuit 18. A dark current correction circuit 19 corrects for differences of dark current.

The probe currents are amplified and output in accordance with commands from a computer 20 through a controlled switching unit 16. The controlled switching unit 16 may be encased in a light and electromagnetic shield box.

The outputs from each probe electrode, the servo circuit 18, the coarse control mechanism, and the dark current correction circuit 19 are taken up by the computer 20, and are monitored by the display device during operation. Numeral 15 denotes a connection terminal.

In a similar manner as in Fig. 2, the lens 8 serves to condense the incident light onto the light-absorbing electrode, which serves to raise the sensitivity, but is not essential. The arrangement of the optical system also is not limited to the systems disclosed in the Examples. The chopper 9 is not an essential component of the photosensing apparatus.

The probe materials and the light-absorbing electrode material described in Examples 1-5 may also be used in this Example.

## Claims

1. A method of measuring the power level of optical radiation, which method comprises:
providing a point-contact optical detector (1,2) having a probe electrode (2), a light-absorbent electrode (1) adjacent thereto, and a servo-adjustment means (4,11) for adjusting the distance therebetween;
applying a constant voltage across said detector (1,2) to generate a probe current;
irradiating said detector (1,2) with intermittent optical radiation (hν); and
amplifying and processing said probe current, which is comprised of both light current and dark current components generated during light and dark periods of said intermittent optical radiation, respectively, thereby to produce a difference signal corresponding to the difference between light current and dark current, and to extract dark current;
meanwhile, adjusting the distance between said probe electrode (2) and said light-absorbent electrode (1) only during each of said dark periods, said servo-adjustment means (4,11) responding to said dark current, extracted as aforesaid, by adjusting said distance to maintain said dark current constant.

2. A method as claimed in claim 1 wherein:
said optical radiation (hν ) is directed onto said detector (1,2) via shutter means (9); and
said probe current is amplified synchronously (10) with operation of said shutter means (9).

3. A method as claimed in either claims 1 or 2, which method includes:
providing one or more additional probe electrodes (2) laterally displaced from said probe electrode (2), and additional adjustment means (4) for adjusting the distance between each additional probe electrode (2) and said light-absorbent electrode (1);
applying a constant voltage between each additional probe electrode (2) and said light-absorbent electrode (1) to generate a respective probe current for each additional probe electrode (2);
adjusting the distance between each additional probe electrode (2) and said light-absorbent electrode (1) using a servo circuit (18) to keep the respective probe currents constant; and
measuring incident light level using a signal produced at an output of said servo circuit (18) for each additional probe electrode (2).

4. An apparatus for measuring the power level of optical radiation, which apparatus comprises:
a point-contact optical detector (1,2) having a probe electrode (2), a light absorbent electrode (1) adjacent thereto, and servo-adjustment means (4,11) for adjusting the distance therebetween;
voltage means for applying a constant voltage between said probe electrode (2) and said light absorbent electrode (1) to generate a probe current; and amplification and processing means (6,10), responsive to said probe current comprised of both light current and dark current components generated during respective light and dark periods of intermittent optical radiation (hν) directed onto said detector (1,2), which amplification and processing means (6,10) is operable to produce a difference signal corresponding to the difference between light current and dark current, and to extract dark current; wherein said servo-adjustment means (4,11) is responsive to the dark current extracted by said amplification and processing means (6,10), but not to any light current, so that the distance between said probe electrode (2) and said light absorbent electrode (1) is adjusted only during each dark period, said servo-adjustment-means (4,11) being operable thus to maintain the dark current-constant.

5. Apparatus as claimed in claim 4 including:
shutter means (9) for passing optical radiation (hν) intermittently; and wherein
said amplification and processing means (6,10) is operable in synchronisation with operation of said shutter means (9).

6. Apparatus as claimed in claim 5 wherein said shutter means (9) is a rotatable optical chopper.

7. Apparatus as claimed in any of claims 4 to 6 and including condenser means (8) arranged for condensing optical radiation (hν) onto the light absorbent electrode (1).

8. An apparatus as claimed in claim 4 which also includes:
one or more additional probe electrodes (2) laterally displaced from said probe electrode (2);
additional servo-adjustment means (4, 18) for adjusting the distance between each additional probe electrode (2) and said light absorbent electrode (1);
voltage means for applying a constant voltage between each additional probe electrode (2) and said light absorbent electrode (1) to generate a respective probe current for each additional probe electrode (2); and wherein
additional adjustment means (4,18) is operable to adjust the distance between each additional probe electrode (2) and said light absorbent electrode (1) in response to said respective probe currents, to keep said respective probe currents constant.

9. Apparatus as claimed in any of claims 4 to 8, the point-contact optical detector (1,2) of which has as said light absorbent electrode (1) one comprised of an electro-conductive electrode member having a surface coating of light absorbent material.

10. Apparatus as claimed in claim 9 wherein said surface coating is located upon that surface of said member which surface is adjacent to said probe electrode (2).

11. Apparatus as claimed in claim 10 wherein said surface coating is of organic dye material.

12. Apparatus as claimed in claim 11 wherein said electro-conductive electrode member is of gold metal and said organic dye material is squarilium-bis-6-octyloazulene (SOAZ).

13. Apparatus as claimed in claim 11 wherein said electro-conductive electrode member is of indium tin oxide (ITO) and said organic dye material is SOAZ.

14. Apparatus as claimed in claim 11 wherein said electro-conductive electrode member is of ITO and said organic dye material is bacteriorhodopsin.

15. Apparatus as claimed in any of claims 9 to 14 wherein said probe electrode (2) is of platinum or other noble metal, or of tungsten.

## Patentansprüche

1. Verfahren zur Messung der Höhe der Leistung von optischer Strahlung, wobei das Verfahren umfaßt:
Bereitstellen eines optischen Punkt-Kontakt-Detektors (1,2) mit einer Sonden-Elektrode (2), einer an die Sonden-Elektrode angrenzenden lichtabsorbierenden Elektrode (1) und einer Einstellungsregelungseinrichtung (4,11) zum Einstellen des Abstands zwischen der Sonden-Elektrode (2) und der lichtabsorbierenden Elektrode (1);
Anlegen einer konstanten Spannung über den Detektor (1,2), wobei ein Sondenstrom erzeugt wird;
Bestrahlen des Detektors (1,2) mit zeitweilig aussetzender optischer Strahlung (hν); und
Verstärken und Verarbeiten des Sondenstroms, der sowohl aus Lichtstrom- als auch aus Dunkelstrombestandteilen, die jeweils während heller und dunkler Perioden der zeitweilig aussetzenden optischen Strahlung erzeugt werden, besteht, wodurch ein Differenzsignal erzeugt wird, das der Differenz zwischen Lichtstrom und Dunkelstrom entspricht, und der Dunkelstrom gewonnen wird;
inzwischen Anpassen des Abstands zwischen der Sonden-Elektrode (2) und der lichtabsorbierenden Elektrode (1) nur während jeder der Dunkelperioden, wobei die Einstellungsregelungseinrichtung (4, 11) auf den wie vorstehend beschrieben gewonnenen Dunkelstrom anspricht, indem der Abstand eingestellt wird, um den Dunkelstrom konstant zu halten.

2. Verfahren nach Anspruch 1, wobei:
die optische Strahlung (hν) auf den Detektor (1,2) über Verschlußeinrichtungen (9) gerichtet wird; und
der Sondenstrom synchron (10) mit dem Betrieb der Verschlußeinrichtung (9) verstärkt wird.

3. Verfahren nach einem der Ansprüche 1 oder 2, wobei das Verfahren umfaßt:
Bereitstellen einer oder mehrerer zusätzlicher Sonden-Elektroden (2), die seitlich von der Sonden-Elektrode (2) verschoben sind, und zusätzlicher Einstellungseinrichtungen (4), um den Abstand zwischen jeder zusätzlichen Sonden-Elektrode (2) und der lichtabsorbierenden Elektrode (1) einzustellen;
Anlegen einer konstanten Spannung zwischen jeder zusätzlichen Sonden-Elektrode (2) und der lichtabsorbierenden Elektrode (1), wobei ein jeweiliger Sondenstrom für jede zusätzliche Sonden-Elektrode (2) erzeugt wird;
Einstellen des Abstands zwischen jeder zusätzlichen Sonden-Elektrode (2) und der lichtabsorbierenden Elektrode (1) unter Verwendung eines Regelkreises (18), um die jeweiligen Sondenströme konstant zu halten; und
Messen des einfallenden Lichtpegels unter Verwendung eines Signals, das bei einem Ausgangssignal des Regelkreises (18) für jede zusätzliche Sonden-Elektrode (2) erzeugt wurde.

4. Vorrichtung zur Messung der Höhe der Leistung von optischer Strahlung, wobei die Vorrichtung umfaßt:
Einen optischen Punkt-Kontakt-Detektor (1,2) mit einer Sonden-Elektrode (2), einer an die Sonden-Elektrode angrenzenden lichtabsorbierenden Elektrode (1) und Einstellungsregelungseinrichtungen (4,11) zum Einstellen des Abstands zwischen der Sonden-Elektrode (2) und der lichtabsorbierenden Elektrode (1);
Spannungseinrichtungen zum Anlegen einer konstanten Spannung zwischen der Sonden-Elektrode (2) und der lichtabsorbierenden Elektrode (1), wobei ein Sondenstrom erzeugt wird; und
Verstärkungs- und Verarbeitungseinrichtungen (6, 10), die auf den Sondenstrom ansprechen, der sowohl aus Lichtstrom- als auch aus Dunkelstrombestandteilen, die jeweils während heller und dunkler Perioden der auf den Detektor (1,2) gerichteten zeitweilig aussetzenden optischen Strahlung (hν) erzeugt werden, besteht, wobei die Verstärkungs- und Verarbeitungseinrichtungen (6, 10) betrieben werden, um ein Differenzsignal zu erzeugen, das der Differenz zwischen Lichtstrom und Dunkelstrom entspricht, und den Dunkelstrom zu gewinnen; wobei die Einstellungsregelungseinrichtungen (4, 11) auf den durch die Verstärkungs- und Verarbeitungseinrichtungen (6,10) gewonnenen Dunkelstrom ansprechen, aber nicht auf einen Lichtstrom, so daß der Abstand zwischen der Sonden-Elektrode (2) und der lichtabsorbierenden Elektrode (1) nur während jeder Dunkelperiode eingestellt wird, wobei die Einstellungsregelungseinrichtung (4,11) betrieben wird, um den Dunkelstrom konstant zu halten.

5. Vorrichtung nach Anspruch 4, umfassend:
Verschlußeinrichtung (9), um optische Strahlung (hν) zeitweilig aussetzend durchzulassen; und wobei
die Verstärkungs- und Verarbeitungseinrichtungen (6,10) in Synchronisation mit dem Betrieb der Verschlußeinrichtung (9) betrieben wird.

6. Vorrichtung nach Anspruch 5, wobei die Verschlußeinrichtung (9) ein drehbarer optischer Chopper ist.

7. Vorrichtung nach einem der Ansprüche 4 bis 6 und umfassend eine Kondensor-Einrichtung (8), zum Bündeln optischer Strahlung (hν) auf die lichtabsorbierende Elektrode (1) angeordnet.

8. Vorrichtung nach Anspruch 4, die auch umfaßt:
eine oder mehrere zusätzliche Sonden-Elektroden (2), die seitlich von der Sonden-Elektrode (2) verschoben sind;
zusätzliche Einstellungs-Regelungseinrichtungen (4,18) zum Einstellen des Abstands zwischen jeder zusätzlichen Sonden-Elektrode (2) und der lichtabsorbierenden Elektrode (1);
Spannungseinrichtungen zum Anlegen einer konstanten Spannung zwischen jeder zusätzlichen Sonden-Elektrode (2) und der lichtabsorbierenden Elektrode (1), wobei ein jeweiliger Sondenstrom für jede zusätzliche Sonden-Elektrode (2) erzeugt wird; und wobei
zusätzliche Einstellungseinrichtungen (4,18) zum Einstellen des Abstands zwischen jeder zusätzlichen Sonden-Elektrode (2) und der lichtabsorbierenden Elektrode (1) in Wechselwirkung mit den jeweiligen Sondenströmen betrieben werden, um die jeweiligen Sondenströme konstant zu halten.

9. Vorrichtung nach einem der Ansprüche 4 bis 8, deren optischer Punktkontakt-Detektor (1,2) als die lichtabsorbierende Elektrode (1) eine hat, die ein elektrisch leitendes Elektrodenelement mit einer Oberflächenbeschichtung aus lichtabsorbierendem Material umfaßt.

10. Vorrichtung nach Anspruch 9, wobei sich die Oberflächenbeschichtung auf der Oberfläche des Elements befindet, die an die Sonden-Elektrode (2) angrenzend ist.

11. Vorrichtung nach Anspruch 10, wobei die Oberflächenbeschichtung aus organischem Farbstoff-Material ist.

12. Vorrichtung nach Anspruch 11, wobei das elektrisch leitende Elektrodenelement aus Gold-Metall ist und das organische Farbstoff-Material Squarilium-bis-6-octyloazulen (SOAZ) ist.

13. Vorrichtung nach Anspruch 11, wobei das elektrisch leitende Elektrodenelement aus Indiumzinnoxid (ITO) ist und das organische Farbstoff-Material SOAZ ist.

14. Vorrichtung nach Anspruch 11, wobei das elektrisch leitende Elektrodenelement aus ITO ist und das organische Farbstoff-Material Bakteriorhodopsin ist.

15. Vorrichtung nach einem der Ansprüche 9 bis 14, wobei die Sonden-Elektrode (2) aus Platin oder einem anderen Edelmetall oder aus Wolfram ist.

## Revendications

1. Un procédé de mesure du niveau de puissance d'un rayonnement optique, ce procédé comprenant les étapes suivantes :
on fournit un détecteur optique à contact ponctuel (1, 2) ayant une électrode de sonde (2), une électrode absorbant la lumière (1) adjacente à l'électrode de sonde, et des moyens de servo-réglage (4, 11) pour régler la distance entre elles;
on applique une tension constante à ce détecteur (1, 2) pour générer un courant de sonde;
on irradie le détecteur (1, 2) avec un rayonnement optique intermittent (hν); et
on amplifie et on traite le courant de sonde, qui comprend à la fois des composantes de courant de lumière et de courant d'obscurité qui sont respectivement générées pendant des périodes de lumière et d'obscurité du rayonnement optique intermittent, pour produire ainsi un signal de différence correspondant à la différence entre le courant de lumière et le courant d'obscurité, et pour extraire le courant d'obscurité;
simultanément, on règle la distance entre l'électrode de sonde (2) et l'électrode absorbant la lumière (1), seulement pendant chacune des périodes d'obscurité, les moyens de servo-réglage (4, 11) réagissant au courant d'obscurité, extrait comme mentionné ci-dessus, en réglant la distance précitée pour maintenir le courant d'obscurité constant.

2. Un procédé selon la revendication 1, dans lequel :
le rayonnement optique (hν) est dirigé vers le détecteur (1, 2) par l'intermédiaire d'un obturateur (9); et
le courant de sonde est amplifié en synchronisme (10) avec le fonctionnement de l'obturateur (9).

3. Un procédé selon l'une quelconque des revendications 1 ou 2, ce procédé comprenant les étapes suivantes :
on fournit une ou plusieurs électrodes de sonde supplémentaires (2) décalées latéralement par rapport à l'électrode de sonde précitée (2), et des moyens de réglage supplémentaires (4) pour régler la distance entre chaque électrode de sonde supplémentaire (2) et l'électrode absorbant la lumière (1);
on applique une tension constante entre chaque électrode de sonde supplémentaire (2) et l'électrode absorbant la lumière (1), pour générer un courant de sonde respectif pour chaque électrode de sonde supplémentaire (2);
on règle la distance entre chaque électrode de sonde supplémentaire (2) et l'électrode absorbant la lumière (1) en utilisant un circuit d'asservissement (18) pour maintenir les courants de sonde respectifs constants; et
on mesure le niveau de la lumière incidente en utilisant un signal qui est produit à une sortie du circuit d'asservissement (18) pour chaque électrode de sonde supplémentaire (2).

4. Un appareil pour mesurer le niveau de puissance d'un rayonnement optique, cet appareil comprenant :
un détecteur optique à contact ponctuel (1, 2) ayant une électrode de sonde (2), une électrode absorbant la lumière (1) adjacente à l'électrode de sonde, et des moyens de servo-réglage (4, 11) pour régler la distance entre elles; des moyens d'application de tension pour appliquer une tension constante entre l'électrode de sonde (2) et l'électrode absorbant la lumière (1), pour générer un courant de sonde; et
des moyens d'amplification et de traitement (6, 10), réagissant au courant de sonde qui comprend à la fois des composantes de courant de lumière et de courant d'obscurité qui sont générées pendantles périodes de lumière et d'obscurité respectives d'un rayonnement optique intermittent (hν) qui est dirigé vers le détecteur (1, 2), ces moyens d'amplification et de traitement (6, 10) étant capables de produire un signal de différence correspondant à la différence entre le courant de lumière et le courant d'obscurité, et d'extraire le courant d'obscurité; dans lequel
les moyens de servo-réglage (4, 11) réagissent au courant d'obscurité qui est extrait par les moyens d'amplification et de traitement (6, 10), mais non au courant de lumière, de façon que la distance entre l'électrode de sonde (2) et l'électrode absorbant la lumière (1) soit réglée seulement pendant chaque période d'obscurité, les moyens de servo-réglage (4, 11) ayant ainsi pour action de maintenir le courant d'obscurité constant.

5. Appareil selon la revendication 4, comprenant :
un obturateur (9) pour transmettre par intermittence le rayonnement optique (hν); et dans lequel
les moyens d'amplification et de traitement (6, 10) peuvent fonctionner en synchronisme avec le fonctionnement de l'obturateur (9).

6. Appareil selon la revendication 5, dans lequel l'obturateur (9) est un dispositif de découpage optique tournant.

7. Appareil selon l'une quelconque des revendications 4 à 6 et comprenant un condenseur (8) conçu pour concentrer le rayonnement optique (hν) sur l'électrode absorbant la lumière (1).

8. Un appareil selon la revendication 4, comprenant également :
une ou plusieurs électrodes de sonde supplémentaires (2) décalées latéralement par rapport à l'électrode de sonde précitée (2);
des moyens de servo-réglage supplémentaires (4, 18) pour régler la distance entre chaque électrode de sonde supplémentaire (2) et l'électrode absorbant la lumière (1);
des moyens d'application de tension pour appliquer une tension constante entre chaque électrode de sonde supplémentaire (2) et l'électrode absorbant la lumière (1), dans le but de générer un courant de sonde respectif pour chaque électrode de sonde supplémentaire (2); et dans lequel
des moyens de réglage supplémentaires (4, 18) sont capables de régler la distance entre chaque électrode de sonde supplémentaire (2) et l'électrode absorbant la lumière (1) sous la dépendance des courants de sonde respectifs, pour maintenir ces courants de sonde respectifs constants.

9. Appareil selon l'une quelconque des revendications 4 à 8, dont le détecteur optique à contact ponctuel (1, 2) comporte, pour l'électrode absorbant la lumière (1), une électrode qui est constituée par un élément d'électrode conducteur de l'électricité ayant un revêtement de surface en une matière absorbant la lumière.

10. Appareil selon la revendication 9, dans lequel le revêtement de surface est placé sur la surface de l'élément précité qui est adjacente à l'électrode de sonde (2).

11. Appareil selon la revendication 10, dans lequel le revêtement de surface est une matière colorante organique.

12. Appareil selon la revendication 11, dans lequel l'élément d'électrode conducteur de l'électricité est en or et la matière colorante organique consiste en squarilium-bis-6-octyloazulène (SOAZ).

13. Appareil selon la revendication 11, dans lequel l'élément d'électrode conducteur de l'électricité consiste en oxyde d'indium-étain (ITO) et la matière colorante organique consiste en SOAZ.

14. Appareil selon la revendication 11, dans lequel l'élément d'électrode conducteur de l'électricité consiste en ITO et la matière colorante organique consiste en bactériorhodopsine.

15. Appareil selon l'une quelconque des revendications 9 à 14, dans lequel l'électrode de sonde (2) est en platine ou en un autre métal précieux, ou en tunsgtène.
